# EUROPEAN PATENT SPECIFICATION

(11) **EP 3 940 653 B1**
(45) Date of publication and mention of the grant of the patent: **17.12.2025**
(21) Application number: 19920134.4
(22) Date of filing: 24.04.2019
(51) Int. Cl.: G07C 9/00, G07C 9/25, G07C 9/26, G07C 9/27

(54) **CONTROL METHOD FOR GATE DEVICE, TERMINAL, GATE DEVICE AND SYSTEM**
STEUERUNGSVERFAHREN FÜR EINE GATE-VORRICHTUNG, ENDGERÄT, GATE-VORRICHTUNG UND SYSTEM
PROCÉDÉ DE COMMANDE DE DISPOSITIF DE PORTE, TERMINAL, DISPOSITIF DE PORTE ET SYSTÈME

(30) Priority: 15.03.2019 CN 201910198823
(43) Date of publication of application: 19.01.2022
(73) Proprietor: Shanghai Huaming Intelligent Terminal Equipment Co., Ltd., Shanghai 201613 (CN)
(72) Inventor: ZHANG, Liang, Shanghai 201613 (CN); ZENG, Yi, Shanghai 201613 (CN); FU, Qiang, Shanghai 201613 (CN); ZHOU, Yilong, Shanghai 201613 (CN)
(74) Representative: Müller-Boré & Partner Patentanwälte PartG mbB
(86) International application number: PCT/CN2019/084151
(87) International publication number: WO 2020/186595

(56) References cited:
- EP-A1- 2 261 839
- EP-A1- 3 118 810
- EP-A1- 3 605 473
- EP-A2- 0 991 027
- WO-A1-2014/151249
- WO-A1-2018/181968
- CN-A- 104 299 305
- CN-A- 107 248 128
- CN-A- 107 665 536
- CN-A- 108 182 414
- CN-A- 109 087 425
- CN-U- 208 172 865
- US-A1- 2019 206 158

## Description

### TECHNICAL FIELD

The present invention relates to a gate device, in particular to a control method for a gate device, a terminal, a gate device and a system.

### BACKGROUND

Identity authentication via a gate device is usually required for admittance in subways, railway stations or office buildings and other public places.

Most of the existing gate devices are based on card swiping operation to achieve user authentication. However, in such places as subways, high-speed railway stations and other places with high passenger throughput, cards may easily get lost when users pass the gate device channel of a gate device by swiping cards, and users often forget to bring cards, so that they cannot timely swipe card to enter or exit the station, resulting in inconvenience for users.

Although some gate devices have already used face recognition for access control of gate devices, which requires networking of gate devices to transmit images collected by cameras on gate devices to an Internet server and to control admittance via gate devices after image authentication.

Because the network is prone to delays, making gate devices prone to failure of normal opening, delayed opening, and so on, and such gate devices are prone to breakdown in case of high passenger throughput, resulting in traffic congestions, so that no extensive application is possible.

Document WO 2018/181968 A1 describes a facial recognition system comprising: a reading unit that receives one or more identifiers transmitted from a wireless tag of one or more users who entered a wireless area which is outside of one longitudinal-direction end of a gate, an acquisition unit that acquires facial characteristic amounts registered in correspondence with the identifiers received from the wireless tags, an imaging unit that images the user, an extraction unit that extracts a face characteristic-amount from image data generated by the imaging unit, and a face collation unit that receives the face characteristic amount extracted by the extraction unit and collates whether there is a match between such characteristic amount and the one or more characteristic amounts acquired by the acquisition unit.

Document EP 3 118 810 A1 describes an information processing method including a process to execute, using first biological data read from a medium held by a passer passing through a first position, and second biological data acquired from an image obtained by imaging the passer passing through the first position, a first authentication processing to authenticate the passer. A process stores third biological data, based on at least one of the first biological data and the second biological data used in the first authentication processing, in a memory, when the authentication of the passer by the first authentication processing has succeeded. A process executes, using fourth biological data acquired from an image obtained by imaging a passer passing through a second position at a more downstream side than the first position in a proceeding direction of the passer, and the third biological data stored in the memory, a second authentication processing to authenticate the passer. A process allows passing through the second position, when the passer is authenticated by the second authentication processing.

Document EP 2 261 839 A1 describes a biometric matching system configured such that group information indicating a pre-defined group to which an identification terminal device belongs is stored. Matching biometric information on a specific person to be identified is registered in an identification terminal device belonging to a predetermined group based on the group information when a predetermined registration condition is satisfied. The matching biometric information registered in the identification terminal device is deleted when a predetermined deletion condition is satisfied.

Document WO 2014/151249 A1 describes a method for providing physical access credentials to a client device. The method includes receiving a request for a physical access credential, wherein the first request includes at least one user access credential and at least one physical access point identifier. The method also includes determining whether the request should be granted based at least in part on the at least one user access credential. In response to determining that the request should be granted, the physical access credential associated with the physical access point is sent.

Document CN 109 087 425 A describes an access equipment passing control method. The access equipment passing control method comprises the steps of: obtaining a first biometric feature of a user acquired at the access equipment; sending the first biometric feature to a mobile terminal, so that the mobile terminal matches the received first biometric feature with a second biometric feature of a user stored in the mobile terminal; and if authorization information sent by the mobile terminal after a successful matching is received, controlling the access equipment to perform a passing operation.

Document CN 108 182 414 A describes a pass detection method. The pass detection method comprises steps that, by means of a short distance wireless communication carried out between wireless access equipment arranged at a pass station and a mobile terminal entering into a signal coverage scope, the identity information and pass users associated with the pass station are detected, and a dynamic face sample database is established based on detected face image samples of the pass users. A face image of a target user acquired by acquisition equipment arranged on the pass station is acquired, and the face image is matched with face image samples of the dynamic face sample database. If the face image is matched with any face image sample of the dynamic face sample database, gate equipment is controlled for releasing the target user.

### SUMMARY

The present invention aims to solve the technical problem to enable convenient and fast opening of a gate device channel without swiping a card by the user.

The object of the present invention is to provide a gate device and a control method to enable convenient and fast opening of a gate device channel without swiping a card by the user.
The claimed invention is defined by the features set forth in the appended independent claims. Additional embodiments of the claimed invention are defined by the dependent claims.

Compared with the existing technology, the beneficial effect of the present invention is mainly embodied in that the present invention enables users to open a gate device channel in a convenient and fast way without swiping a card.

### BRIEF DESCRIPTION OF THE DIAGRAMS

Figure 1 is a flowchart of the control method for a gate device in a first embodiment of the present invention;
Figure 2 is a flowchart of the control method for a gate device in a second embodiment of the present invention;
Figure 3 is a flowchart of the Step S1 in the second embodiment of the present invention;
Figure 4 is a flowchart of the Step S2 in the second embodiment of the present invention;
Figure 5 is a flowchart of the Step S4 in the second embodiment of the present invention;
Figure 6 is another flowchart of the Step S4 in the second embodiment of the present invention;
Figure 7 is a flowchart of the control method for a gate device in a third embodiment of the present invention;
Figure 8 is a flowchart of the control method for a gate device in a fourth embodiment of the present invention;
Figure 9 is a flowchart of the Step S103 in the fourth embodiment of the present invention;
Figure 10 is a flowchart of the Steps S104 to S106 in the third embodiment of the present invention;
Figure 11 is a block diagram of the circuit module of the gate device in a fifth embodiment of the present invention;
Figure 12 is a block diagram of the circuit module of the gate device in a sixth embodiment of the present invention;
Figure 13 is a block diagram of the circuit module of the terminal in a seventh embodiment of the present invention;
Figure 14 is a block diagram of the circuit module of the terminal in an eighth embodiment of the present invention;
Figure 15 is a block diagram of the circuit module of the system in the seventh embodiment of the present invention;
Figure 16 is a block diagram of the circuit module of the system in a ninth embodiment of the present invention.

Reference signs: Gate device 6, wireless transmission device 61, first Bluetooth module 611, face recognition device 62, first camera module 621, first display module 622, matching module 623, data storage module 624, data clearing module 625, control device 63, data analysis module 631, gate device channel opening module 632, terminal 9, wireless communication device 91, network transmission module 911, second Bluetooth module 912, image collection device 92, second camera module 921, second display module 922.

### DETAILED DESCRIPTION OF THE INVENTION

The control method and the system for the gate device of the present invention are described below in details with reference to the drawings, which represents preferred embodiments of the present invention. The following description should therefore be understood as being widely known to those skilled in this field and not as a restriction on the present invention.

The technical solutions disclosed in the embodiments of the present invention are applied to gate devices and terminals. The terminals can be mobile phones, tablets, smart wearable devices, personal digital assistants, mobile sale devices and other electronic devices that can be held by users, and the terminals can record terminal motion data, upload user's face image or collect user's face image and so on. Smart wearable devices can be wristband smart wearable devices, or smart wearable devices that can be worn on a user's upper limb, such as an intelligent wearable device that can be worn on a user's finger.

### Embodiment 1

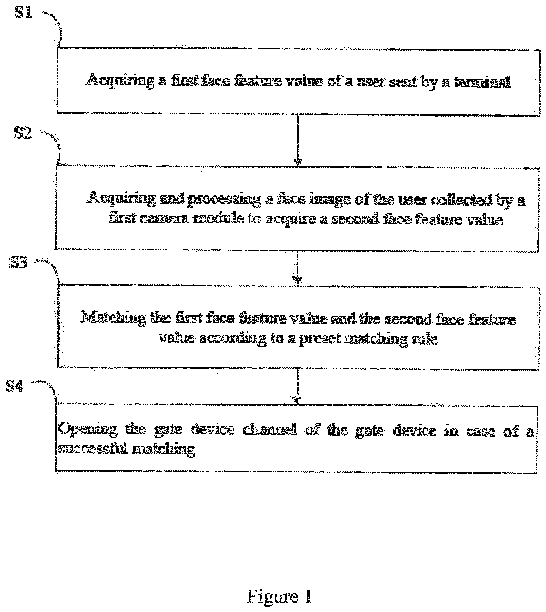

Refer to Figure 1. The present embodiment provides a control method for a gate device. The control method is used for a gate device and comprises following steps:
Step S1: Acquiring a first face feature value of a user sent by a terminal;
Step S2: Acquiring and processing a face image of the user collected by a first camera module to acquire a second face feature value;
Step S3: Matching the first face feature value and the second face feature value according to a preset matching rule;
Step S4: Opening the gate device channel of the gate device in case of a successful matching.

Specifically, the user uploads the user's face image acquired by a second camera module on the terminal via the terminal, for example, via a mobile phone, to a server on the Internet. A first face feature value is acquired by processing the face image based on a preset image algorithm, such as Baidu image algorithm, 360 image algorithm, Google image algorithm, etc. by the server and then sent to gate device via the terminal.

After acquiring the face image of the user collected by the first camera module, the gate device can acquire a second face feature value through an offline processing via the preset image algorithm, such as Baidu image algorithm, 360 image algorithm, etc., and then match the first face feature value and the second face feature value according to a preset matching algorithm. If the matching is successful, a gate barrier used to open and close the gate device channel in the gate device can receive an open signal to open the gate device channel, allowing passengers to pass. If the matching is unsuccessful, the gate device channel remains closed. Preferably, the same algorithm is used for the image algorithms in steps S1 and S2, which can achieve higher matching degree, avoid the issue of failed matching and recognition due to the image algorithm's recognition precision, and improve the reliability of gate device and its control method in this application.

As can be seen from the above steps, the control method of the present application makes it unnecessary for the gate device to transmit the collected image to the Internet via a network, that is, a real-time second face feature value is acquired through offline processing, so as to enable convenient and fast opening of the gate device channel when the first face feature value sent by the terminal is acquired by the gate device, and the second face feature value and the first face feature value are matched. In this way, the issue of gate device breakdown or delayed opening due to network delays in the face image checking process for gate devices in the state of the art is solved. The gate device need not prestore the user's image during use, which reduces the work load of gate device, simplifies the operation, shortens the image authentication time of gate device, and improves the efficiency of gate device, so that users do not need to carry electronic cards, making it easier for users to travel around. In addition, it can also prevent the loss suffered by users due to the unauthorized usage of bus cards and other cards after the loss of the cards.

Specifically, the step S1 in this embodiment can also be preceded by step S2 and followed by step S3, so this embodiment does not limit or specify the sequence in which gate device acquires the first face image feature and the second face image feature.

In addition, it is worth noting that first camera module can be the first camera module with which the gate device is equipped, or a separately provided module, which is not limited or specified in this embodiment.

### Embodiment 2

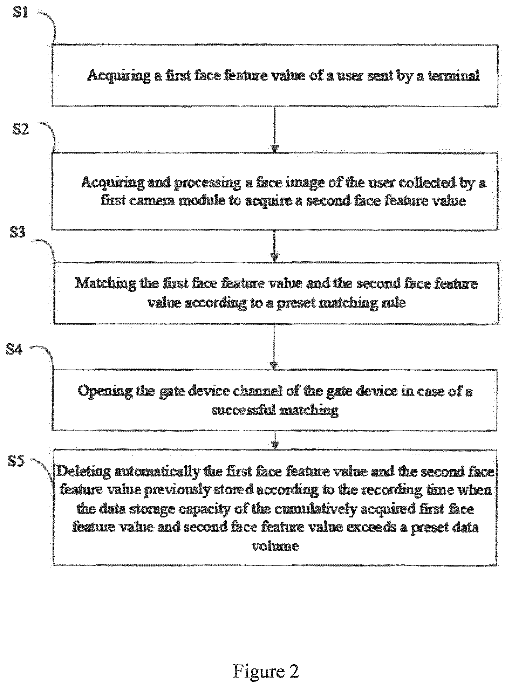

Refer to Figure 2. The present embodiment provides a control method for a gate device. The control method is used for a gate device and comprises following steps:
Step S1: Acquiring a first face feature value of a user sent by a terminal;
Step S2: Acquiring and processing a face image of the user collected by a first camera module to acquire a second face feature value;
Step S3: Matching the first face feature value and the second face feature value according to a preset matching rule;
Step S4: Opening the gate device channel of the gate device in case of a successful matching.

Specifically, the user uploads the user's face image acquired by a second camera module on the terminal via the terminal, for example, via a mobile phone, to a server on the Internet. A first face feature value is acquired by processing the face image based on a preset image algorithm, such as Baidu image algorithm, 360 image algorithm, Google image algorithm, etc. by the server and then sent to gate device via the terminal.

After acquiring the face image of the user collected by the first camera module, the gate device can acquire a second face feature value through an offline processing via the preset image algorithm, such as Baidu image algorithm, 360 image algorithm, etc., and then match the first face feature value and the second face feature value according to a preset matching algorithm. If the matching is successful, a gate barrier used to open and close the gate device channel in the gate device can receive an open signal to open the gate device channel, allowing passengers to pass. If the matching is unsuccessful, the gate device channel remains closed. Preferably, the same algorithm is used for the image algorithms in steps S1 and S2, which can achieve higher matching degree, avoid the issue of failed matching and recognition due to the image algorithm's recognition precision, and improve the reliability of gate device and its control method in this application.

As can be seen from the above steps, the control method of the present application makes it unnecessary for the gate device to transmit the collected image to the Internet via a network, that is, a real-time second face feature value is acquired through offline processing, so as to enable convenient and fast opening of the gate device channel when the first face feature value sent by the terminal is acquired by the gate device, and the second face feature value and the first face feature value are matched. In this way, the issue of gate device breakdown or delayed opening due to network delays in the face image checking process for gate devices in the state of the art is solved. The gate device need not prestore the user's image during use, which reduces the work load of gate device, enables adaption to working environments with high passenger throughput, simplifies the operation, shortens the image authentication time of gate device, and improves the efficiency of gate device, so that users do not need to carry electronic cards, making it easier for users to travel around. In addition, it can also prevent the loss suffered by users due to the unauthorized usage of bus cards and other cards after the loss of the cards.

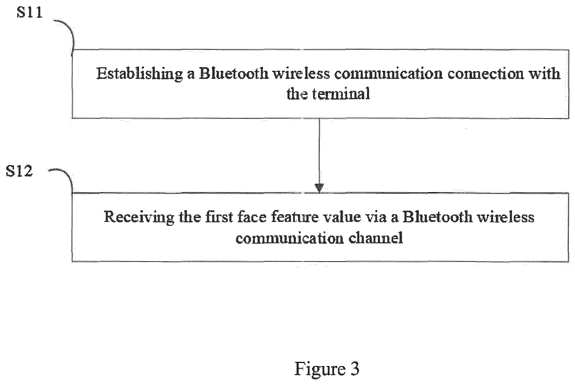

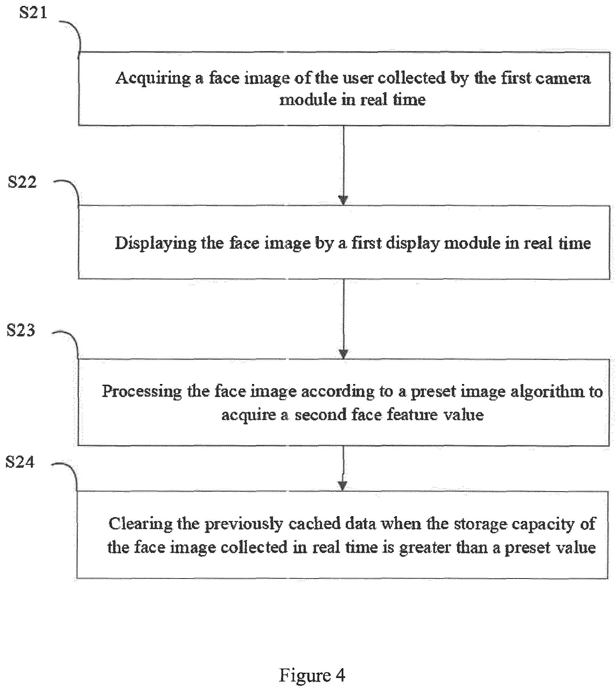

Specifically, as shown in Figures 3 and 4, the step S1 in this embodiment can also be preceded by step S2 and followed by step S3, so this embodiment does not limit or specify the sequence in which gate device acquires the first face image feature and the second face image feature.

Specifically, the step S1 can include:
Step S11: Establishing a Bluetooth wireless communication connection with the terminal;
Step S12: Receiving the first face feature value via a Bluetooth wireless communication channel.

The gate device is connected to the terminal via Bluetooth wireless communication connection and receives the first face feature value, which takes advantage of the Bluetooth transmission speed and large transmission volume, ensures fast transmission of face feature value with a large data volume to the gate device, avoids delays, guarantees the smooth execution of subsequent steps and shortens the time needed to pass the gate device.

Obviously, the gate device in this embodiment can also realize the wireless communication connection between the gate device and the terminal through other wireless communication connections, such as Infrared wireless communication and WIFI wireless communication.

Further, as a preferred option, as shown in Figure 4, the step S2 can include:
Step S21: Acquiring a face image of the user collected by the first camera module in real time;
Step S22: Displaying the face image by a first display module in real time;
Step S23: Processing the face image according to a preset image algorithm to acquire a second face feature value.

Displaying the user's face image collected by the first camera module in real time through the first display module can enable the user to observe the displayed image, and quickly move into the collection area of the first camera module, which makes it more convenient for the first camera module to collect the user's face image, shortens the collection time of gate device, and improves the traffic efficiency.

The step S2 further includes:
Step S24: Clearing the previously cached data when the storage capacity of the face image collected in real time is greater than a preset value.

As can be seen from the description above, the above step can reduce the storage space occupied by real-time face images, reduce the manufacturing cost and work load of the gate device and enable better adaption to situations with large passenger throughput.

In addition, it should be noted that the step S22 can also be a non-essential step for the step S2 of this embodiment, for example, by asking the user to stand in the specified collection area, the displaying through the first display module can be omitted.

The step S24 can also be preceded by step S21 and followed by step S23, so the sequence among the steps S21 to S24 is neither limited nor further specified here.

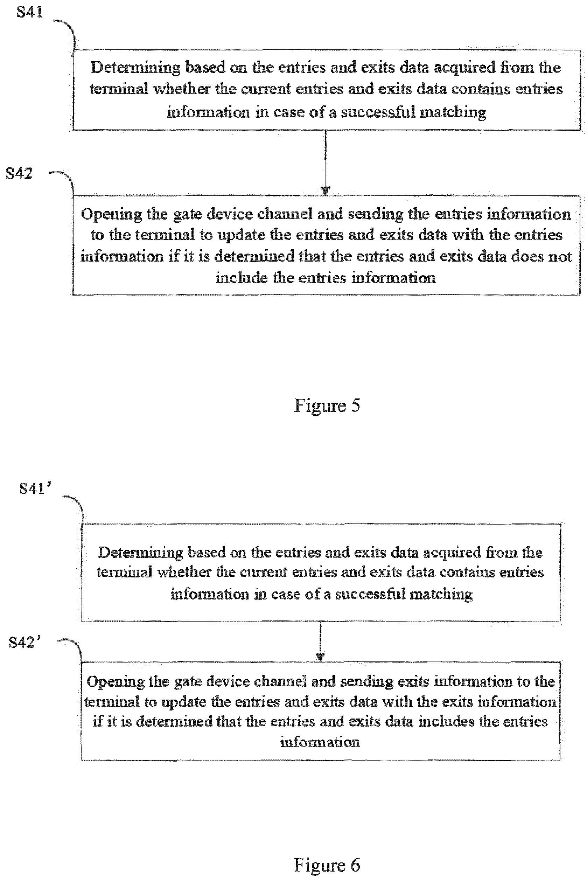

Further, according to the invention, as shown in Figure 5, when the current gate device channel is an entry channel, the step S4 includes:
Step S41: Determining based on the entries and exits data acquired from the terminal whether the current entries and exits data contains entries information in case of a successful matching;
Step S42: Opening the gate device channel and sending the entries information to the terminal to update the entries and exits data with the entries information if it is determined that the entries and exits data does not include the entries information.

Further, according to the invention, as shown in Figure 6, when the current gate device channel is an exit channel, the step S4 includes:
Step S41': Determining based on the entries and exits data acquired from the terminal whether the current entries and exits data contains entries information in case of a successful matching;
Step S42': Opening the gate device channel and sending exits information to the terminal to update the entries and exits data with the exits information if it is determined that the entries and exits data includes the entries information.

As can be seen from the description above, when the gate device matches first face feature value and second face feature value successfully, it can be determined based on the acquired entries and exits data whether the user has entered the station or not, so that the corresponding gate device can judge whether the user has entered the station based on the entries and exits data and decide whether to open the gate device channel to avoid undesirable opening of the gate device channel.

It is worth noting that the updating of entries and exits data with entries information or exits information can take place by incorporating the same into the entries and exits data based on time sequence or by replacement and by incorporating the replaced data into a historical data records, which is neither limited nor further specified in this embodiment.

It is worth noting that the method further includes the following step after step S41:
Determining the amount to be deducted based on the entries and exits data.

It can be seen that the gate device can determine the amount to be deducted based on the entries and exits information recorded in the entries and exits data and the deduction rules. Here, it is necessary to explain that the entries and exits data in this embodiment cannot only include entries and exits information, but also include business data such as deduction rules, which is not further specified here.

After step S4, the present embodiment further includes:
Step S5: Deleting automatically the first face feature value and the second face feature value previously stored according to the recording time when the data storage capacity of the cumulatively acquired first face feature value and second face feature value exceeds a preset data volume.

It can be seen that this step can enable effective use of the storage space of the gate device, eliminating the concerns that the gate device cannot operate normally due to excessive storage capacity of the generated data when users pass the gate device, which helps meet the demand of large passenger traffic.

The preset data volume in this embodiment, such as the number of data entries stored, can be determined by the current gate device storage space, working environment, daily passenger traffic and other factors.

In addition, the storage capacity of the first face feature value and second face feature value data cumulatively acquired in step S6 can also be transmitted to a server via the back-end transmission or terminal transmission connected with the gate device, so as to achieve backup of gate access data.

### Embodiment 3

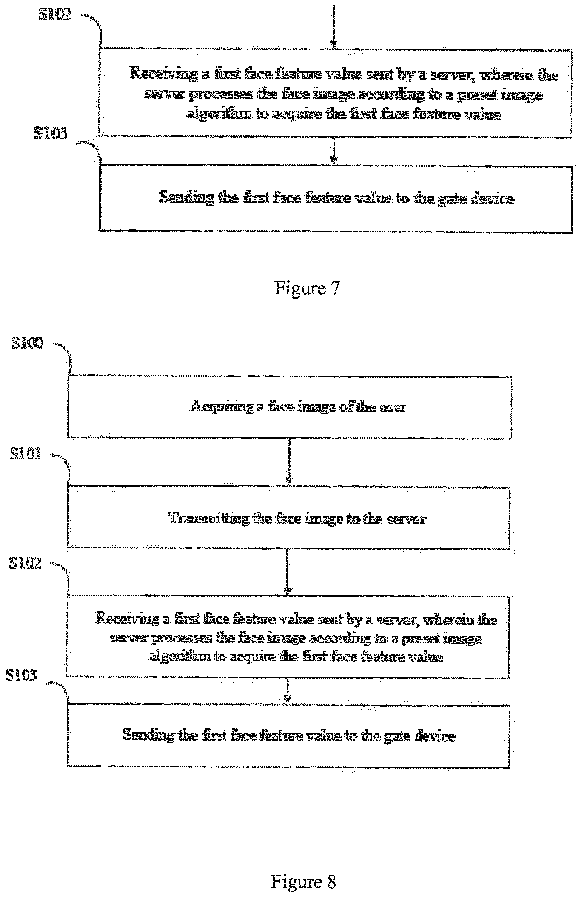

Refer to Figure 7. The present embodiment provides a control method for a gate device. The control method is used for a terminal and comprises following steps:
Step S102: Receiving a first face feature value sent by a server, wherein the server processes the face image according to a preset image algorithm to acquire the first face feature value;
Step S103: Sending the first face feature value to the gate device.

Specifically, in this application, the user can control the opening of the gate device terminal of the gate device via the terminal, for example a smart wrist watch, a mobile phone, etc., upload the user's face image to server through the local database or retrieve the user's face image stored in the server, so that server can acquire the first face feature value by processing face image based on the preset image algorithm, such as Baidu image algorithm, 360 image algorithm, Google image algorithm, etc., and then send it to the terminal.

When users need to pass gate device, they can send the first face feature value to gate device via the terminal to open the gate device channel of the gate device.

The control method of this application enables users to use a terminal that can receive the first face feature value to send the first face feature value to the gate device, which can easily and quickly open the gate device channel. In this way, the issue of gate device breakdown or delayed opening due to network delays in the face image checking process for gate devices in the state of the art is solved. The gate device need not prestore the user's image during use, which reduces the work load of gate device, enables adaption to working environments with high passenger throughput, simplifies the operation, shortens the image authentication time of gate device, and improves the efficiency of gate device, so that users do not need to carry electronic cards, making it easier for users to travel around. In addition, it can also prevent the loss suffered by users due to the unauthorized usage of bus cards and other cards after the loss of the cards.

It should be noted that in this embodiment, the user can be registered through an APP in the terminal, and then the first face feature value corresponding to the registered user's face image can be acquired from server, wherein the first face feature value can be the user's face image collected by the user through other terminal, such as a mobile phone, a computer, etc., and the user's face image can be uploaded to server through the local database, or the user's face image stored in the server can be retrieved, then the first face feature value is acquired after image processing by the server.

### Embodiment 4

Refer to Figure 8. The present embodiment provides a control method for a gate device. The control method is used for a terminal and comprises following steps:
Step S102: Receiving a first face feature value sent by a server, wherein the server processes the face image according to a preset image algorithm to acquire the first face feature value;
Step S103: Sending the first face feature value to the gate device.

Specifically, in this application, the user can control the opening of the gate device terminal of the gate device via the terminal, for example a smart wrist watch, a mobile phone, etc., upload the user's face image to server through the local database or retrieve the user's face image stored in the server, so that server can acquire the first face feature value by processing face image based on the preset image algorithm, such as Baidu image algorithm, 360 image algorithm, Google image algorithm, etc., and then send it to the terminal.

When users need to pass gate device, they can send the first face feature value to gate device via the terminal to open the gate device channel of the gate device.

The control method of this application enables users to use a terminal that can receive the first face feature value to send the first face feature value to the gate device, which can easily and quickly open the gate device channel. In this way, the issue of gate device breakdown or delayed opening due to network delays in the face image checking process for gate devices in the state of the art is solved. The gate device need not prestore the user's image during use, which reduces the work load of gate device, enables adaption to working environments with high passenger throughput, simplifies the operation, shortens the image authentication time of gate device, and improves the efficiency of gate device, so that users do not need to carry electronic cards, making it easier for users to travel around. In addition, it can also prevent the loss suffered by users due to the unauthorized usage of bus cards and other cards after the loss of the cards.

Further, as a preferred option, as shown in Figure 8, the present embodiment includes the following before step S102:
Step S100: Acquiring a face image of the user;
Step S101: Transmitting the face image to the server.

As can be seen from above, in this application, the user's face image can also be acquired through terminal, such as through the second camera module, or from terminal's local database, and transmitted to server, so as to facilitate the user's operation of the terminal and simplify the process.

Specifically, the user can register a user's account on terminal's APP, and then upload the user's face image to server through the APP, or acquire the user's face image via terminal's second camera module and upload it to the server, and the user can check the uploaded face image or the captured face image through the second display module, so that the uploaded image meets the specification of feature extraction and is close to the standard face image. Here, it is important to note that the terminal APP in this embodiment can register multiple user accounts and upload face images of corresponding users to achieve face-swiping through the same terminal after switching of user account to pass the gate.

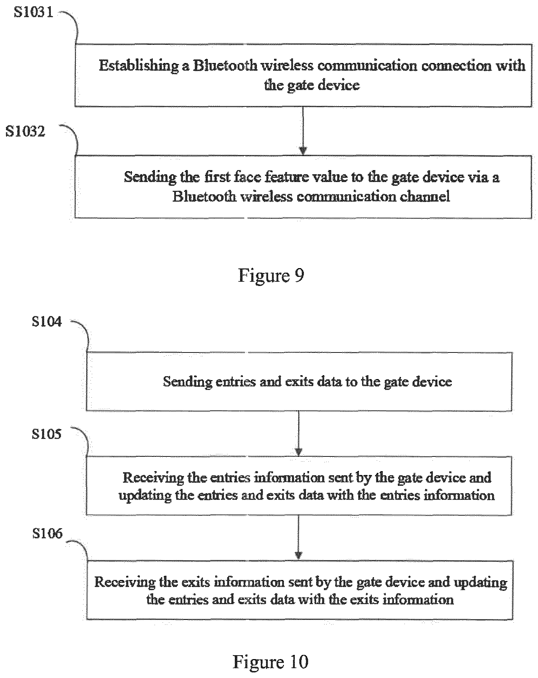

Specifically, as shown in Figure 9, the step S103 includes:
Step S1031: Establishing a Bluetooth wireless communication connection with the gate device;
Step S1032: Sending the first face feature value to the gate device via a Bluetooth wireless communication channel.

In this way, the terminal in the present application is connected to the gate device via Bluetooth wireless communication connection and sends the first face feature value, which takes advantage of the Bluetooth transmission speed and large transmission volume, ensures fast transmission of face feature value with a large data volume to the gate device, avoids delays, guarantees the smooth execution of subsequent steps and shortens the time needed to pass the gate device.

Further, as shown in Figure 10, the control method in the present embodiment further includes:
Step 104: Sending entries and exits data to the gate device;
Step 105: Receiving the entries information sent by the gate device and updating the entries and exits data with the entries information;
Step 106: Receiving the exits information sent by the gate device and updating the entries and exits data with the exits information;

As can be seen from the description above, when sending entries and exits data to gate device through terminal and receiving entries and exits information to update entries and exits data, that is, through data transmission between terminal and gate device and through data update, the gate device can judge whether the user has entered the station based on the entries and exits data acquired from the terminal and decide whether to open the gate device channel to avoid undesirable opening of the gate device channel.

It is worth noting that the updating of entries and exits data with entries information or exits information can take place by incorporating the same into the entries and exits data based on time sequence or by replacement and by incorporating the replaced data into a historical data records, which is neither limited nor further specified in this embodiment.

It is notable that the above steps S104 to S 106 may be carried out either before or after the steps S101 or after the steps S103 or simultaneously, and this embodiment does not limit or specify the sequence between the steps S104 to S106 and the steps S101 to S103.

### Embodiment 5

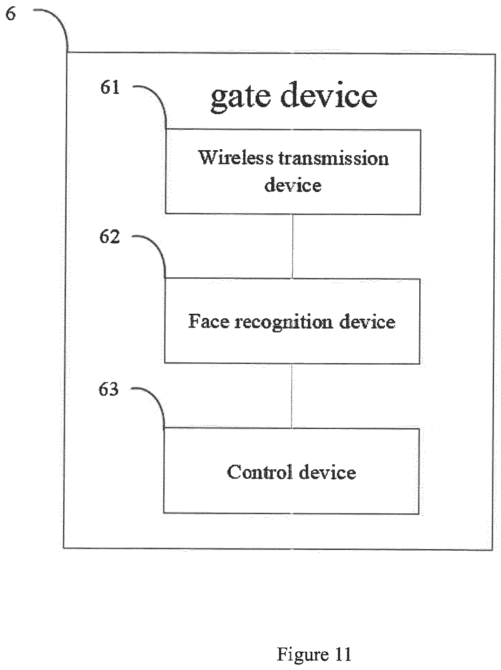

As shown in Figure 11, the present embodiment provides a gate device comprising:
A wireless transmission device 61 for acquiring a first face feature value of a user sent by a terminal 9;
A face recognition device 62 used for acquiring and processing a face image of the user collected by a first camera module 621 to acquire a second face feature value and for matching the first face feature value and the second face feature value according to a preset matching rule;
A control device 63 for opening the gate device channel of the gate device 6 in response to an instruction after a successful matching by the face recognition device 62.

As can be seen from the above, the gate device 6 of the present application doesn't need to transmit the collected image to the Internet via a network, that is, a real-time second face feature value is acquired through offline processing, so as to enable convenient and fast opening of the gate device channel when the first face feature value sent by the terminal 9 is acquired by the gate device 6, and the second face feature value and the first face feature value are matched. In this way, the issue of gate device 6 breakdown or delayed opening due to network delays in the face image checking process for gate devices 6 in the state of the art is solved. The gate device 6 need not prestore the user's image during use, which reduces the work load of gate device 6, simplifies the operation, shortens the image authentication time of gate device 6, and improves the efficiency of gate device 6, so that users do not need to carry electronic cards, making it easier for users to travel around. In addition, it can also prevent the loss suffered by users due to the unauthorized usage of bus cards and other cards after the loss of the cards.

### Embodiment 6

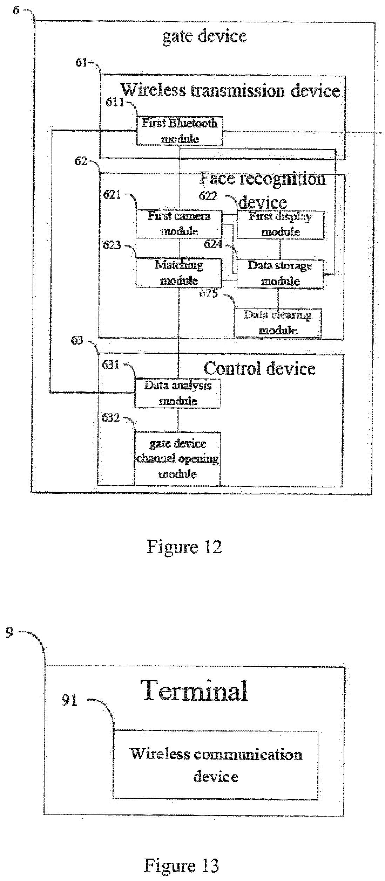

As shown in Figure 12, the present embodiment provides a gate device comprising:
A wireless transmission device 61 for acquiring a first face feature value of a user sent by a terminal 9;
A face recognition device 62 used for acquiring and processing a face image of the user collected by a first camera module 621 to acquire a second face feature value and for matching the first face feature value and the second face feature value according to a preset matching rule;
A control device 63 for opening the gate device channel of the gate device 6 in response to an instruction after a successful matching by the face recognition device 62.

As can be seen from the above, the gate device 6 of the present application doesn't need to transmit the collected image to the Internet via a network, that is, a real-time second face feature value is acquired through offline processing, so as to enable convenient and fast opening of the gate device channel when the first face feature value sent by the terminal 9 is acquired by the gate device 6, and the second face feature value and the first face feature value are matched. In this way, the issue of gate device 6 breakdown or delayed opening due to network delays in the face image checking process for gate devices 6 in the state of the art is solved. The gate device 6 need not prestore the user's image during use, which reduces the work load of gate device 6, simplifies the operation, shortens the image authentication time of gate device 6, and improves the efficiency of gate device 6, so that users do not need to carry electronic cards, making it easier for users to travel around. In addition, it can also prevent the loss suffered by users due to the unauthorized usage of bus cards and other cards after the loss of the cards.

Specifically, the wireless transmission device 61 in the present embodiment includes a first Bluetooth module 611 for establishing a Bluetooth wireless communication connection with the terminal 9 and receiving the first face feature value via a Bluetooth wireless communication channel.

As can be seen from above, the gate device 6 is connected to the terminal 9 via Bluetooth wireless communication connection and receives the first face feature value, which takes advantage of the Bluetooth transmission speed and large transmission volume, ensures fast transmission of face feature value with a large data volume to the gate device 6, avoids delays, guarantees the smooth execution of subsequent steps and shortens the time needed to pass the gate device 6.

Obviously, the wireless transmission device 61 in this embodiment can also be other wireless communication devices, such as Infrared wireless communication module, WIFI module and other wireless communication modules, in order to realize the wireless communication between gate device 6 and the terminal 9.

Further, as a preferred option, the face recognition device 62 in the present embodiment includes: A first camera module 621 for collecting a face image of the user in real time; A first display module 622 for displaying the face image in real time; and a matching module 623 for processing the face image according to a preset image algorithm to acquire a second face feature value and for matching the first face feature value and the second face feature value according to a preset matching rule.

Displaying the user's face image collected by the first camera module 621 in real time through the first display module 622 can enable the user to observe the displayed image, and quickly move into the collection area of the first camera module 621, which makes it more convenient for the first camera module 621 to collect the user's face image, shortens the collection time of gate device 6, and improves the traffic efficiency.

Further, as a preferred option, the face recognition device 62 in the present embodiment further includes a data storage module 624 for storing the face image and clearing the previously cached data via the processor when the face image data collected in real time is larger than a preset value, so as to reduce the storage space occupied by the real-time collected face image, reduce the manufacturing cost of gate device 6 and its workload, which can help better deal with the situation with large passenger flow.

It is notable that data storage module 624 in this embodiment is also used to store the first face feature value and the second face feature value, and when matching module 623 works, the first face feature value and the second face feature value data stored by the data storage module 624 is retrieved and matched. If the matching is successful, an instruction signal is sent to the control device 63.

Further, as a preferred option, when the gate device 6 is an entry gate device 6, the control device 63 includes:
A data analysis module 631 for determining based on the entries and exits data acquired from the terminal 9 whether the current entries and exits data contains entries information after responding to an instruction after a successful matching by the face recognition device 62;
An gate device channel opening module 632 for opening the gate device channel and sending entries information to the terminal 9 to update the entries and exits data with the entries information if the data analysis module 631 determines that the entries and exits data does not include the entries information and the current gate device channel is an entry channel.

Further, as a preferred option, when the gate device 6 is an exit gate device 6, the control device 63 includes:
A data analysis module 631 for determining based on the entries and exits data acquired from the terminal 9 whether the current entries and exits data contains entries information after responding to an instruction after a successful matching by the face recognition device 62;
A gate device channel opening module 632 for opening the gate device channel and sending exits information to the terminal 9 to update the entries and exits data with the exits information if the data analysis module 631 determines that the entries and exits data includes the entries information and the current gate device channel is an exit channel.

For example, the control device 63 in this embodiment is an industrial control computer which, after receiving the instruction signal sent by the face recognition device 62, acquires the user's entries and exits data via the wireless transmission device 61, and analyzes the entries and exits data through the data analysis module 631.

As can be seen from the description above, when the gate device 6 matches first face feature value and second face feature value successfully, it can be determined based on the acquired entries and exits data whether the user has entered the station or not, so that the corresponding gate device 6 can judge whether the user has entered the station based on the entries and exits data and decide whether to open the gate device channel to avoid undesirable opening of the gate device channel.

It is worth noting that the updating of entries and exits data with entries information or exits information can take place by incorporating the same into the entries and exits data based on time sequence or by replacement and by incorporating the replaced data into a historical data records, which is neither limited nor further specified in this embodiment.

It is worth noting that the data analysis module 631 is also used for determining the amount to be deducted based on the entries and exits data.

It can be seen that the gate device 6 can determine the amount to be deducted based on the entries and exits information recorded in the entries and exits data and the deduction rules. Here, it is necessary to explain that the entries and exits data in this embodiment cannot only include entries and exits information, but also include business data such as deduction rules, which is not further specified here.

Further, as a preferred option, the face recognition device 62 in the present embodiment further includes a data clearing module 625 for deleting automatically the first face feature value and the second face feature value previously stored according to the recording time when the data storage capacity of the cumulatively acquired first face feature value and second face feature value exceeds a preset data volume.

It can be seen that the data clearing module 625 can enable effective use of the storage space of the gate device, eliminating the concerns that the gate device 6 cannot operate normally due to excessive storage capacity of the data of the first face feature value and the second face feature value generated when users pass the gate device, which helps meet the demand of large passenger traffic.

The preset data volume in this embodiment, such as the number of data entries stored, can be determined by the storage space of the current gate device 6, the working environment, daily passenger traffic and other factors.

In addition, the data clearing module 625 can also transmit the storage capacity of the first face feature value and second face feature value data cumulatively acquired to the server 10 via the back-end transmission or transmission of the terminal 9 connected with the gate device 6, so as to achieve back-up of gate access data.

### Embodiment 7

As shown in Figure 13, the present embodiment provides a terminal comprising:
A wireless communication device 91 for receiving a first face feature value sent by a server 10 and sending the first face feature value to the gate device 6, wherein the server 10 processes the face image according to a preset image algorithm to acquire the first face feature value.

As can be seen from the above description, the terminal 9 of this application can receive the first face feature value, so that users can use the terminal 9 to send the first face feature value to the gate device 6, which can easily and quickly open the gate device channel. In this way, the issue of gate device 6 breakdown or delayed opening due to network delays in the face image checking process for gate devices 6 in the state of the art is solved. The gate device 6 need not prestore the user's image during use, which reduces the work load of gate device 6, enables adaption to working environments with high passenger throughput, simplifies the operation, shortens the image authentication time of gate device 6, and improves the efficiency of gate device 6, so that users do not need to carry electronic cards, making it easier for users to travel around. In addition, it can also prevent the loss suffered by users due to the unauthorized usage of bus cards and other cards after the loss of the cards.

It should be noted that in this embodiment, the user can be registered through an APP in the terminal 9, and then the first face feature value corresponding to the registered user's face image can be acquired from server 10, wherein the first face feature value can be the user's face image collected by the user through other terminal 9, such as a mobile phone, a computer, etc., and the user's face image can be uploaded to server 10 through the local database, or the user's face image stored in the server 10 can be retrieved, then the first face feature value is acquired after image processing by the server 10. Here, it is important to note that the terminal APP in this embodiment can register multiple user accounts and upload face images of corresponding users to achieve face-swiping through the same terminal after switching of user account to pass the gate.

### Embodiment 8

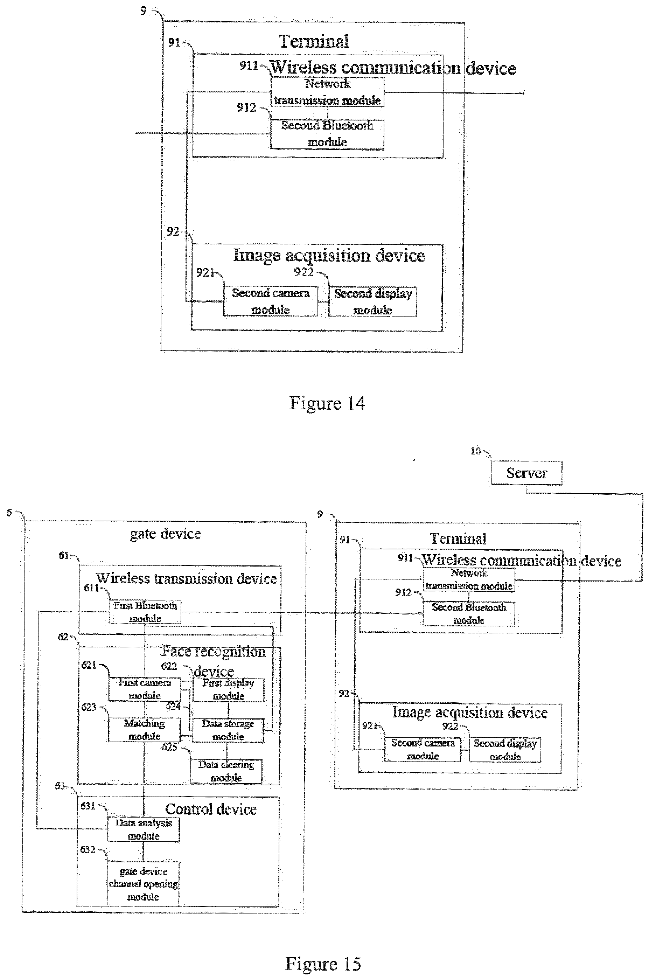

As shown in Figure 14, the present embodiment provides a terminal comprising:
A wireless communication device 91 for receiving a first face feature value sent by a server 10, wherein the server 10 processes the face image according to a preset image algorithm to acquire the first face feature value, so as to send the first face feature value to the gate device 6.

As can be seen from the above description, the terminal 9 of this application can receive the first face feature value, so that users can use the terminal 9 to send the first face feature value to the gate device 6, which can easily and quickly open the gate device channel. In this way, the issue of gate device 6 breakdown or delayed opening due to network delays in the face image checking process for gate devices 6 in the state of the art is solved. The gate device 6 need not prestore the user's image during use, which reduces the work load of gate device 6, enables adaption to working environments with high passenger throughput, simplifies the operation, shortens the image authentication time of gate device 6, and improves the efficiency of gate device 6, so that users do not need to carry electronic cards, making it easier for users to travel around. In addition, it can also prevent the loss suffered by users due to the unauthorized usage of bus cards and other cards after the loss of the cards.

Further, as a preferred option, the wireless communication device 61 includes: A network transmission module 911 for receiving the first face feature value sent by the server 10; and a second Bluetooth module 912 for establishing a Bluetooth wireless communication connection with the gate device 6 and sending the first face feature value to the gate device 6 via a Bluetooth wireless communication channel. With the Bluetooth wireless connection to the gate device 6, the first face feature value acquired from server 10 is sent to the gate device 6 by the network transmission module 911, which takes advantage of the Bluetooth transmission speed and large transmission volume, ensures fast transmission of face feature value with a large data volume to the gate device 6, avoids delays, guarantees the smooth execution of subsequent steps and shortens the time needed to pass the gate device 6.

Further, as a preferred option, the terminal 9 in the present embodiment further includes an image collection device 92 for acquiring the face image of the user; wherein the network transmission module 911 is also used for transmitting the face image to the server 10. In this way, the user can also acquire the user's face image through the terminal 9, such as through the second camera module 921, or from the local database of the terminal 9, and transmit the face image to the server 10, so as to facilitate the user's operation of the terminal 9 and simplify the process.

Specifically, the user can register a user's account on an APP at the terminal 9, and then upload the user's face image to server 10 through the APP, or acquire the user's face image via terminal 9's second camera module and upload it to the server 10, and the user can check the uploaded face image or the captured face image through the second display module, so that the uploaded image meets the specification of feature extraction and is close to the standard face image. The network transmission module 911 can be a 4G module, a WiFi module, etc. Here, it is important to note that the terminal APP in this embodiment can register multiple user accounts and upload face images of corresponding users to achieve face-swiping through the same terminal after switching of user account to pass the gate.

Further, as a preferred option, the second camera module 921 is further used for:
Sending entries and exits data to the gate device 6;
Receiving the entries information sent by the gate device 6 and updating the entries and exits data with the entries information;
Receiving the exits information sent by the gate device 6 and updating the entries and exits data with the exits information.

As can be seen from the description above, the terminal 9 in the present application can also be used for sending entries and exits data to the gate device 6 and receiving entries and exits information to update entries and exits data, that is, through data transmission between the terminal 9 and the gate device 6 and through data update, the so that the gate device 6 can judge whether the user has entered the station based on the entries and exits data acquired from the terminal 9 and decide whether to open the gate device channel to avoid undesirable opening of the gate device channel.

It is worth noting that the updating of entries and exits data with entries information or exits information can take place by incorporating the same into the entries and exits data based on time sequence or by replacement and by incorporating the replaced data into a historical data records, which is neither limited nor further specified in this embodiment.

### Embodiment 9

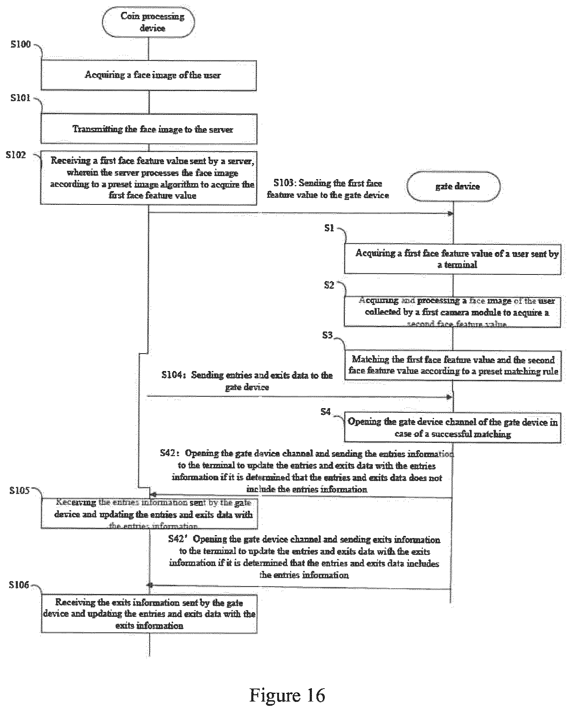

The present application further provides a gate device access control system which, as shown in Figures 15 and 16, includes a gate device in any of the above embodiments and a terminal in any of the above embodiments, the terminal being used for opening the gate device channel of the gate device.

As can be seen from the above embodiments, the system of the present application makes it unnecessary or the gate device 6 to transmit the collected image to the Internet via a network, that is, a real-time second face feature value is acquired through offline processing, so as to enable convenient and fast opening of the gate device channel when the first face feature value sent by the terminal 9 is acquired by the gate device 6, and the second face feature value and the first face feature value are matched. In this way, the issue of gate device 6 breakdown or delayed opening due to network delays in the face image checking process for gate devices 6 in the state of the art is solved. The gate device 6 need not prestore the user's image during use, which reduces the work load of gate device 6, enables adaption to working environments with high passenger throughput, simplifies the operation, shortens the image authentication time of gate device 6, and improves the efficiency of gate device 6, so that users do not need to carry electronic cards, making it easier for users to travel around. In addition, it can also prevent the loss suffered by users due to the unauthorized usage of bus cards and other cards after the loss of the cards.

Specifically, as shown in Figure 15, the gate device 6 in the system of the present embodiment includes:
A wireless transmission device 61 for acquiring a first face feature value of a user sent by a terminal 9;
A face recognition device 62 used for acquiring and processing a face image of the user collected by a first camera module 621 to acquire a second face feature value and for matching the first face feature value and the second face feature value according to a preset matching rule;
A control device 63 for opening the gate device channel of the gate device 6 in response to an instruction after a successful matching by the face recognition device 62.

The terminal 9 in the system of the present embodiment includes:
A wireless communication device 91 for receiving a first face feature value sent by a server 10, wherein the server 10 processes the user's face image according to a preset image algorithm to acquire the first face feature value, so as to send the first face feature value to the gate device 6.

The terminal 9 of this application can receive the first face feature value sent by the server 10 via the wireless communication device 91 and gate device 6 can receive the first face feature value sent by the terminal via data transmission between the wireless transmission device 61 and wireless communication device 91, and process the user's face image collected by the first camera module through the face recognition device 62 to acquire a second face feature value and after matching the first face feature value with the second face feature value, it can send an instruction to the control device (63) to easily and quickly open the gate device channel.

Further, as a preferred option, the wireless transmission device 61 of the gate device 6 includes a first Bluetooth module 611 for establishing a Bluetooth wireless communication connection with the terminal 9 and receiving the first face feature value via a Bluetooth wireless communication channel.

As shown in Figure 15, the wireless communication device of the terminal includes: A network transmission module 911 for receiving the first face feature value sent by the server 10; and a second Bluetooth module 912 for establishing a Bluetooth wireless communication connection with the first Bluetooth module 611 of the gate device 6 and sending the first face feature value, the entries and exits data and other information to the gate device 6 via a Bluetooth wireless communication channel.

As can be seen from the above, the gate device 6 and the terminal 9 of the system can be connected via Bluetooth wireless communication connection to transmit the first face feature value, which ensures fast transmission of face feature value with a large data volume to the gate device 6, avoids delays, guarantees the smooth execution of subsequent steps and shortens the time needed to pass the gate device 6. Obviously, the wireless transmission device 61 in this embodiment can also be other wireless communication devices, such as Infrared wireless communication module, WIFI module and other wireless communication modules, in order to realize the wireless communication between gate device 6 and the terminal 9, without being limited to Bluetooth module.

Further, as a preferred option, the face recognition device 62 of the gate device 6 includes: A first camera module 621 for collecting a face image of the user in real time; A first display module 622 for displaying the face image in real time; and a matching module 623 for processing the face image according to a preset image algorithm to acquire a second face feature value and for matching the first face feature value and the second face feature value according to a preset matching rule.

Displaying the user's face image collected by the first camera module 621 in real time through the first display module 622 can enable the user to observe the displayed image, and thus quickly move into the collection area of the first camera module 621, which makes it more convenient for the first camera module 621 to collect the user's face image, shortens the collection time of gate device 6, and improves the traffic efficiency.

Further, as a preferred option, the face recognition device 62 in the present embodiment further includes a data storage module 624 for storing the face image and clearing the previously cached data via the processor when the face image data collected in real time is larger than a preset value, so as to reduce the storage space occupied by the real-time collected face image, reduce the manufacturing cost of gate device 6 and its workload, which can help better deal with the situation with large passenger flow.

It is notable that data storage module 624 in this embodiment is also used to store the first face feature value and the second face feature value, and when matching module 623 works, the first face feature value and the second face feature value data stored by the data storage module 624 is retrieved and matched. If the matching is successful, an instruction signal is sent to the control device 63.

Further, as a preferred option, when the gate device 6 is an entry gate device 6, the control device 63 includes:
A data analysis module 631 for determining based on the entries and exits data acquired from the terminal 9 whether the current entries and exits data contains entries information after responding to an instruction after a successful matching by the face recognition device 62;
An gate device channel opening module 632 for opening the gate device channel and sending entries information to the terminal 9 to update the entries and exits data with the entries information if the data analysis module 631 determines that the entries and exits data does not include the entries information and the current gate device channel is an entry channel.

Further, as a preferred option, when the gate device 6 is an exit gate device 6, the control device 63 includes:
A data analysis module 631 for determining based on the entries and exits data acquired from the terminal 9 whether the current entries and exits data, for example the entries and exits data acquired via the first Bluetooth module 611 as shown in Figure 14 and sent by the terminal 9, contains entries information after responding to an instruction after a successful matching by the face recognition device 62, and for analyzing the entries and exits data to determine whether the current entries and exits data contains entries information.

A gate device channel opening module 632 for opening the gate device channel and sending exits information to the terminal 9 to update the entries and exits data with the exits information if the data analysis module 631 determines that the entries and exits data includes the entries information and the current gate device channel is an exit channel.

For example, the control device 63 in this embodiment can be an industrial control computer which, after receiving the instruction signal sent by the face recognition device 62, acquires the user's entries and exits data via the first Bluetooth module 611 in the wireless transmission device 61, and analyzes the entries and exits data through the data analysis module 631.

As can be seen from the description above, when the gate device 6 matches first face feature value and second face feature value successfully, it can be determined based on the acquired entries and exits data whether the user has entered the station or not, so that the corresponding gate device 6 can judge whether the user has entered the station based on the entries and exits data and decide whether to open the gate device channel to avoid undesirable opening of the gate device channel.

It is worth noting that the updating of entries and exits data with entries information or exits information can take place by incorporating the same into the entries and exits data based on time sequence or by replacement and by incorporating the replaced data into a historical data records, which is neither limited nor further specified in this embodiment.

It is worth noting that the data analysis module 631 is also used for determining the amount to be deducted based on the entries and exits data.

It can be seen that the gate device 6 can determine the amount to be deducted based on the entries and exits information recorded in the entries and exits data and the deduction rules. Here, it is necessary to explain that the entries and exits data in this embodiment cannot only include entries and exits information, but also include business data such as deduction rules, which is not further specified here.

Further, as a preferred option, the face recognition device 62 in the present embodiment further includes a data clearing module 625 for deleting automatically the first face feature value and the second face feature value previously stored according to the recording time when the data storage capacity of the cumulatively acquired first face feature value and second face feature value exceeds a preset data volume, for example, when the data clearing module 625 detects that the first face feature value and the second face feature value cumulatively stored in the data storage module 624 exceeds the preset data volume, the first face feature value and the second face feature value previously stored will be automatically deleted according to the recording time.

It can be seen that the data clearing module 625 can enable effective use of the storage space of the gate device, eliminating the concerns that the gate device 6 cannot operate normally due to excessive storage capacity of the data of the first face feature value and the second face feature value generated when users pass the gate device, which helps meet the demand of large passenger traffic.

The preset data volume in this embodiment, such as the number of data entries stored, can be determined by the storage space of the current gate device 6, the working environment, daily passenger traffic and other factors.

In addition, the data clearing module 625 can also transmit the storage capacity of the first face feature value and second face feature value data cumulatively acquired to the server 10 via the back-end transmission or transmission of the terminal 9 connected with the gate device 6, so as to achieve back-up of gate access data.

Further, as a preferred option, the terminal 9 in the present embodiment further includes an image collection device 92 for acquiring the face image of the user; wherein the network transmission module 911 is also used for transmitting the face image to the server 10. In this way, the user can also acquire the user's face image through the terminal 9, such as through the second camera module 921, or from the local database of the terminal 9, and transmit the face image to the server 10, so as to facilitate the user's operation of the terminal 9 and simplify the process.

Specifically, the user can register a user's account on an APP at the terminal 9, and then acquire the user's face image via terminal 9's second camera module and upload it to the server 10, and the user can check the uploaded face image or the captured face image through the second display module, so that the uploaded image meets the specification of feature extraction and is close to the standard face image. The network transmission module 911 can be a 4G module, a WiFi module, etc.

As shown in Figure 16, the interaction between the terminal 9 and the gate device 6 is described below to briefly explain the working principle of the system:
On the terminal side, the user first uses the terminal 9 to execute the actions in the following steps S100 to S102:
Step S100: Acquiring a face image of the user;
Step S101: Transmitting the face image to the server 10;
Step S102: Receiving a first face feature value sent by the server 10, wherein the server 10 processes the face image according to a preset image algorithm to acquire the first face feature value;

After the user approaches the gate device 6 with the terminal 9, the action of the following steps S103 is initiated:
Step S103: Sending the first face feature value to the gate device 6.

On the gate device side, actions of the following steps S1 to S5 are performed during the data interaction between the gate device 6 and the terminal 9:
Step S1: Acquiring a first face feature value of a user sent by the terminal 9;
Step S2: Acquiring and processing a face image of the user collected by the first camera module 621 to acquire a second face feature value;
Step S3: Matching the first face feature value and the second face feature value according to a preset matching rule;
Step S4: Opening the gate device channel of the gate device 6 in case of a successful matching.

If the matching by the matching module 623 of the gate device 6 is unsuccessful, the gate device channel remains closed.

Before the gate device 6 performs the above step S4, the terminal 9 performs the action of the step 104 below:
Step 104: Sending entries and exits data to the gate device 6;

After the terminal 9 performs the step 104 below, the gate device 6 performs the action of the step S4:
When the current gate device 6 is an entry gate and thus the gate device channel is an entry channel, the specific process of step S4 performed by the gate device 6 is described below:
Step S41: Determining based on the entries and exits data acquired from the terminal 9 whether the current entries and exits data contains entries information in case of a successful matching;
Step S42: Opening the gate device channel and sending the entries information to the terminal 9 to update the entries and exits data with the entries information if it is determined that the entries and exits data does not include the entries information.

When the current gate device 6 is an exit gate and thus the gate device channel is an exit channel, the step S4 performed by the gate device 6 is described below:
Step S41': Determining based on the entries and exits data acquired from the terminal 9 whether the current entries and exits data contains entries information in case of a successful matching;
Step S42': Opening the gate device channel and sending exits information to the terminal 9 to update the entries and exits data with the exits information if it is determined that the entries and exits data includes the entries information.

When the terminal 9 is carried by the user and passes the gate device channel of the entry gate, the action after the step 105 below is performed:
Step 105: Receiving the entries information sent by the gate device 6 and updating the entries and exits data with the entries information;

When the terminal 9 is carried by the user and passes the gate device channel of the exit gate, the action after the step 106 below is performed:
Step 106: Receiving the exits information sent by the gate device 6 and updating the entries and exits data with the exits information.

In addition, the gate device 6 of the system of this embodiment may refer to the aforementioned embodiments 1 to 2 and 5 to 6, and the terminal 9 of the system of this embodiment may also refer to the aforementioned embodiments 3 to 4 and 7 to 8, and the specific structure and working principle thereof are not further described here.

## Claims

1. A control method for a gate device (6), the method including the following steps:
Acquiring (S1), by a wireless transmission device (61) of the gate device (6), a first face feature value of a user sent by a terminal (9);
Acquiring and processing (S2), by a face recognition device (62) of the gate device (6), a face image of the user collected by a first camera module (621) to acquire a second face feature value;
Matching (S3), by the face recognition device (62), the first face feature value and the second face feature value according to a preset matching rule;
Opening (S4), by a control device (63) of the gate device (6), the gate device channel of the gate device (6) in case of a successful matching,
wherein the step of opening (S4) the gate device channel of the gate device in case of a successful matching includes:
Determining (S41, S41'), by a data analysis module (631) of the control device (63), based on entries and exits data acquired from the terminal whether the current entries and exits data contains entries information in case of a successful matching;
Opening (S42), by a gate device channel opening module (632) of the control device (63), the gate device channel and sending the entries information to the terminal to update the entries and exits data with the entries information if it is determined, by the data analysis module (631), that the entries and exits data does not include the entries information and the current gate device channel is an entry channel;
Opening (S42'), by the gate device channel opening module (632), the gate device channel and sending exits information to the terminal to update the entries and exits data with the exits information if it is determined, by the data analysis module (631), that the entries and exits data includes the entries information and the current gate device channel is an exit channel.

2. The control method of a gate device according to claim 1, **characterized in that** the step of acquiring a first face feature value of a user sent by a terminal includes:
Establishing a Bluetooth wireless communication connection with the terminal;
Receiving the first face feature value via a Bluetooth wireless communication channel.

3. The control method of a gate device according to any one of the preceding claims, **characterized in that** the step of acquiring and processing a face image of the user collected by a first camera module to acquire a second face feature value includes:
Acquiring a face image of the user collected by the first camera module in real time;
Displaying the face image by a first display module in real time;
Processing the face image according to a preset image algorithm to acquire a second face feature value;
Clearing the previously cached data when the storage capacity of the face image collected in real time is greater than a preset value.

4. The control method of a gate device according to any one of the preceding claims, **characterized in that** after the step of opening the gate device channel of the gate device in case of a successful matching, it includes further:
Deleting automatically the first face feature value and the second face feature value previously stored according to the recording time when the data storage capacity of the cumulatively acquired first face feature value and second face feature value exceeds a preset data volume.

5. A gate device (6) including:
A wireless transmission device (61) for acquiring a first face feature value of a user sent by a terminal (9);
A face recognition device (62) used for acquiring and processing a face image of the user collected by a first camera module (621) to acquire a second face feature value and for matching the first face feature value and the second face feature value according to a preset matching rule;
A control device (63) for opening the gate device channel of the gate device in response to an instruction after a successful matching by the face recognition device,
wherein the control device (63) includes:
A data analysis module (631) for determining based on entries and exits data acquired from the terminal whether the current entries and exits data contains entries information after responding to an instruction after a successful matching by the face recognition device;
A gate device channel opening module (632) for:
Opening the gate device channel and sending entries information to the terminal to update the entries and exits data with the entries information if the data analysis module determines that the entries and exits data does not include the entries information and the current gate device channel is an entry channel;
Opening the gate device channel and sending exits information to the terminal to update the entries and exits data with the exits information if the data analysis module determines that the entries and exits data includes the entries information and the current gate device channel is an exit channel.

6. The gate device according to claim 5, **characterized in that** the wireless transmission device includes:
A first Bluetooth module for establishing a Bluetooth wireless communication connection with the terminal and receiving the first face feature value via a Bluetooth wireless communication channel.

7. The gate device according to any one of claims 5 to 6, **characterized in that** the face recognition device includes:
A first camera module for collecting a face image of the user in real time;
A first display module for displaying the face image in real time;
A matching module for processing the face image according to a preset image algorithm to acquire a second face feature value and for matching the first face feature value and the second face feature value according to a preset matching rule;
A data storage module for storing the face image and clearing the previously cached data via the processor when the face image data collected in real time is larger than a preset value.

8. The gate device according to any one of claims 5 to 7, **characterized in that** face recognition device includes further:
A data clearing module for deleting automatically the first face feature value and the second face feature value previously stored according to the recording time when the data storage capacity of the cumulatively acquired first face feature value and second face feature value exceeds a preset data volume.

9. A gate device access control system including a gate device (6) according to any one of the claims 5 to 8, and a terminal (9) being used for opening the gate device channel of the gate device.

## Patentansprüche

1. Ein Steuerungsverfahren einer Torvorrichtung (6), wobei das Verfahren die folgenden Schritte beinhaltet:
Erfassen (S1), durch eine drahtlose Übertragungsvorrichtung (61) der Torvorrichtung (6), eines ersten Gesichtsmerkmalswerts eines Benutzers, der von einem Endgerät bzw. Terminal *(terminal)* (9) gesendet wird;
Erfassen und Verarbeiten (S2), durch eine Gesichtserkennungsvorrichtung (62) der Torvorrichtung (6), eines Gesichtsbildes des Benutzers, das von einem ersten Kameramodul (621) aufgenommen wurde, um einen zweiten Gesichtsmerkmalswert zu erfassen;
Abgleichen (S3) des ersten Gesichtsmerkmalswertes und des zweiten Gesichtsmerkmalswertes durch die Gesichtserkennungsvorrichtung (62) gemäß einer voreingestellten Abgleichregel;
Öffnen (S4), durch eine Steuervorrichtung (63) der Torvorrichtung (6), des Torvorrichtungskanals der Torvorrichtung (6) im Falle eines erfolgreichen Abgleichs,
wobei der Schritt des Öffnens (4) des Torvorrichtungskanals im Falle eines erfolgreichen Abgleichs Folgendes beinhaltet:
Bestimmen (S41, S41'), durch ein Datenanalysemodul (631) der Steuervorrichtung (63), basierend auf den vom Terminal erfassten Ein- und Austrittsdaten, ob die aktuellen Ein- und Austrittsdaten im Falle eines erfolgreichen Abgleichs Eintrittsinformationen enthalten;
Öffnen (S42), durch ein Torvorrichtungskanal-Öffnungsmodul (632) der Steuervorrichtung (63), des Torvorrichtungskanals und Senden der Eintrittsinformationen an den Terminal, um die Ein- und Austrittsdaten mit den Eintrittsinformationen zu aktualisieren, falls durch das Datenanalysemodul (631) festgestellt wird, dass die Ein- und Austrittsdaten die Eintrittsinformationen nicht enthalten und der aktuelle Torvorrichtungskanal ein Eintrittskanal ist;
Öffnen (S42'), durch das Torvorrichtungskanal-Öffnungsmodul (632), des Torvorrichtungskanals und Senden von Austrittsinformationen an den Terminal, um die Ein- und Austrittsdaten mit den Austrittsinformationen zu aktualisieren, falls das Datenanalysemodul (631) feststellt, dass die Ein- und Austrittsdaten die Eintrittsinformationen enthalten und der aktuelle Torvorrichtungskanal ein Austrittskanal ist.

2. Das Steuerungsverfahren einer Torvorrichtung nach Anspruch 1, **dadurch gekennzeichnet, dass** der Schritt des Erfassens eines ersten Gesichtsmerkmalswerts eines Benutzers, der von einem Terminal gesendet wird, Folgendes umfasst:
Herstellen einer Bluetooth-Drahtloskommunikationsverbindung mit dem Terminal;
Empfangen des ersten Gesichtsmerkmalswerts über einen Bluetooth-Drahtloskommunikationskanal.

3. Das Steuerungsverfahren einer Torvorrichtung nach irgendeinem der vorstehenden Ansprüche, **dadurch gekennzeichnet, dass** der Schritt des Erfassens und Verarbeitens eines Gesichtsbildes des Benutzers, das von einem ersten Kameramodul aufgenommen wurde, um einen zweiten Gesichtsmerkmalswert zu erfassen, Folgendes umfasst:
Erfassen eines vom ersten Kameramodul in Echtzeit aufgenommenen Gesichtsbildes des Benutzers;
Anzeigen des Gesichtsbildes durch ein erstes Anzeigemodul in Echtzeit;
Verarbeiten des Gesichtsbildes gemäß einem voreingestellten Bildalgorithmus, zur Erfassung eines zweiten Gesichtsmerkmalswertes;
Löschen der zuvor zwischengespeicherten Daten, sobald die vom in Echtzeit aufgenommenen Gesichtsbild belegte Speicherkapazität einen voreingestellten Wert überschreitet.

4. Das Steuerungsverfahren einer Torvorrichtung nach irgendeinem der vorstehenden Ansprüche, **dadurch gekennzeichnet, dass** es nach dem Schritt des Öffnens des Torvorrichtungskanals der Torvorrichtung im Falle eines erfolgreichen Abgleichs ferner Folgendes beinhaltet:
Automatisches Löschen der entsprechend der Aufzeichnungszeit zuvor gespeicherten Gesichtsmerkmalswerte eins und zwei, wenn die Datenspeicherkapazität des kumulativ erfassten ersten Gesichtsmerkmalswerts und zweiten Gesichtsmerkmalswerts ein voreingestelltes Datenvolumen überschreitet.

5. Eine Torvorrichtung (6), die Folgendes beinhaltet:
Eine drahtlose Übertragungsvorrichtung (61) zum Erfassen eines ersten Gesichtsmerkmalswerts eines Benutzers, der von einer Übertragungsvorrichtung (9) gesendet wird;
Eine Gesichtserkennungsvorrichtung (62), die verwendet wird zum Erfassen und Verarbeiten eines von einem ersten Kameramodul (621) aufgenommenen Gesichtsbildes des Benutzers, um einen zweiten Gesichtsmerkmalswert zu erfassen, und zum Abgleichen des ersten Gesichtsmerkmalswertes und des zweiten Gesichtsmerkmalswertes gemäß einer voreingestellten Abgleichregel;
Eine Steuervorrichtung (63) zum Öffnen des Torvorrichtungkanals der Torvorrichtung als Reaktion auf eine Anweisung nach einem erfolgreichen Abgleich durch die Gesichtserkennungsvorrichtung,
wobei die Steuervorrichtung (3) Folgendes beinhaltet:
Ein Datenanalysemodul (631) zum Bestimmen auf der Grundlage von Ein- und Austrittsdaten, die vom Terminal erfasst werden, ob die aktuellen Einund Austrittsdaten Eintrittsdaten enthalten, nachdem auf eine Anweisung nach einem erfolgreichen Abgleich durch die Gesichtserkennungsvorrichtung reagiert wurde;
Ein Torvorrichtungskanal-Öffnungsmodul (632) zum Öffnen des Torvorrichtungskanals und zum Senden von Eintrittsinformationen an den Terminal, um die Ein- und Austrittsdaten mit den Eintrittsinformationen zu aktualisieren, falls das Datenanalysemodul feststellt, dass die Ein- und Austrittsdaten keine Eintrittsinformationen enthalten und der aktuelle Torvorrichtungskanal ein Eintrittskanal ist;
Öffnen des Torvorrichtungskanals und Senden von Austrittsinformationen an den Terminal, um die Ein- und Austrittsdaten mit den Austrittsinformationen zu aktualisieren, falls das Datenanalysemodul feststellt, dass die Ein- und Austrittsdaten die Eintrittsinformationen enthalten und der aktuelle Torvorrichtungskanal ein Austrittskanal ist.

6. Die Torvorrichtung nach Anspruch 5, **dadurch gekennzeichnet, dass** die drahtlose Übertragungsvorrichtung Folgendes beinhaltet:
Ein erstes Bluetooth-Modul zum Herstellen einer Bluetooth-Drahtloskommunikationsverbindung mit dem Terminal, und zum Empfangen des ersten Gesichtsmerkmalswertes über einen Bluetooth-Drahtloskommunikationskanal.

7. Die Torvorrichtung nach irgendeinem der Ansprüche von 5 bis 6, **dadurch gekennzeichnet, dass** die Gesichtserkennungsvorrichtung Folgendes beinhaltet:
Ein erstes Kameramodul zum Aufnehmen eines Gesichtsbildes des Benutzers in Echtzeit;
Ein erstes Anzeigemodul zum Anzeigen des Gesichtsbildes in Echtzeit;
Ein Abgleichmodul zum Verarbeiten des Gesichtsbildes gemäß einem voreingestellten Bildalgorithmus, zur Erfassung eines zweiten Gesichtsmerkmalswertes, und zum Abgleichen des ersten Gesichtsmerkmalswertes und des zweiten Gesichtsmerkmalswertes gemäß einer voreingestellten Abgleichregel;
Ein Datenspeichermodul zum Speichern des Gesichtsbildes und zum Löschen der zuvor zwischengespeicherten Daten über den Prozessor, wenn die in Echtzeit aufgenommenen Gesichtsbilddaten größer als ein voreingestellter Wert sind.

8. Die Torvorrichtung nach irgendeinem der Ansprüche von 5 bis 7, **dadurch gekennzeichnet, dass** die Gesichtserkennungsvorrichtung ferner Folgendes beinhaltet:
Ein Datenlöschmodul zum automatischen Löschen der zuvor gespeicherten Gesichtsmerkmalswerte eins und zwei, entsprechend der Aufzeichnungszeit, wenn die Datenspeicherkapazität des kumulativ erfassten ersten Gesichtsmerkmalswerts und zweiten Gesichtsmerkmalswerts ein voreingestelltes Datenvolumen überschreitet.

9. Ein Torvorrichtungs-Zugangssteuersystem, das eine Torvorrichtung (6) nach irgendeinem der Ansprüche von 5 bis 8 und ein Terminal (9) umfasst, das zum Öffnen des Torvorrichtungskanals der Torvorrichtung verwendet wird.

## Revendications

1. Un procédé de commande d'un dispositif de porte (*gate device*) (6), le procédé incluant les étapes suivantes :
Acquérir (S1), par un dispositif de transmission sans fil (61) du dispositif de porte (6), une première valeur de caractéristique faciale d'un utilisateur envoyée par un terminal (9) ;
Acquérir et traiter (S2), par un dispositif de reconnaissance faciale (62) du dispositif de porte (6), une image faciale de l'utilisateur captée par un premier module caméra (621) afin d'acquérir une deuxième valeur caractéristique faciale ;
Vérifier la correspondance ou encore apparier (*matching*) (S3), par le dispositif de reconnaissance faciale (62), de la première valeur caractéristique faciale et de la deuxième valeur caractéristique faciale selon une règle d'appariement prédéfinie ;
Ouvrir (S4), par un dispositif de commande (63) du dispositif de porte (6), le canal de dispositif de porte (6) en cas d'appariement réussi,
sachant que l'étape d'ouverture (S4) du canal de dispositif de porte en cas d'appariement réussi inclut le fait de :
Déterminer (S41, S41'), par un module d'analyse de données (631) du dispositif de commande (63), sur la base des données d'entrées et de sorties acquises à partir du terminal, si les données d'entrées et de sorties actuelles contiennent des informations d'entrées en cas d'appariement réussi ;
Ouvrir (S42), par un module d'ouverture de canal de dispositif de porte (632) du dispositif de commande (63), le canal de dispositif de porte, et envoyer des informations d'entrées au terminal afin de mettre à jour les données d'entrées et de sorties avec les informations d'entrées s'il est déterminé par le module d'analyse de données (631) que les données d'entrées et de sorties ne contiennent pas les informations d'entrées et que le canal de dispositif de porte actuel est un canal d'entrée ;
Ouvrir (S42'), par le module d'ouverture de canal de dispositif de porte (632), le canal de dispositif de porte, et envoyer des informations de sorties au terminal pour mettre à jour les données d'entrées et de sorties avec les informations de sorties s'il est déterminé par le module d'analyse de données (631) que les données d'entrées et de sorties contiennent les informations d'entrées et que le canal actuel du dispositif de porte est un canal de sortie.

2. Le procédé de commande d'un dispositif de porte d'après la revendication 1, **caractérisé en ce que** l'étape consistant à acquérir une première valeur de caractéristique faciale d'un utilisateur envoyée par un terminal comprend le fait de :
Établir une connexion de communication sans fil Bluetooth avec le terminal ;
Recevoir la première valeur de caractéristique faciale via un canal de communication sans fil Bluetooth.

3. Le procédé de commande d'un dispositif de porte d'après l'une quelconque des revendications précédentes, **caractérisé en ce que** l'étape consistant à acquérir et à traiter une image faciale de l'utilisateur captée par un premier module caméra afin d'acquérir une deuxième valeur de caractéristique faciale comprend le fait de :
Acquérir en temps réel une image faciale de l'utilisateur captée par le premier module caméra ;
Afficher en temps réel l'image faciale par un premier module d'affichage ;
Traiter l'image faciale selon un algorithme d'image prédéfini pour acquérir une deuxième valeur de caractéristique faciale ;
Effacer les données précédemment mises en cache lorsque la capacité de stockage de l'image faciale captée en temps réel est supérieure à une valeur prédéfinie.

4. Le procédé de commande d'un dispositif de porte d'après l'une quelconque des revendications précédentes, **caractérisé en ce qu'**après l'étape consistant à ouvrir le canal de dispositif de porte en cas d'appariement réussi, il comprend en outre le fait de :
Supprimer automatiquement la première valeur de caractéristique faciale et la deuxième valeur de caractéristique faciale précédemment stockées en fonction du temps d'enregistrement lorsque la capacité de stockage de données de la première valeur de caractéristique faciale et de la deuxième valeur de caractéristique faciale acquises de manière cumulative dépasse un volume de données prédéfini.

5. Un dispositif de porte (6) incluant :
Un dispositif de transmission sans fil (61) pour acquérir une première valeur de caractéristique faciale d'un utilisateur envoyée par un terminal (9) ;
Un dispositif de reconnaissance faciale (62) utilisé pour acquérir et traiter une image faciale de l'utilisateur captée par un premier module caméra (621) afin d'acquérir une deuxième valeur de caractéristique faciale et pour apparier la première valeur de caractéristique faciale et la deuxième valeur de caractéristique faciale selon une règle d'appariement prédéfinie ;
Un dispositif de commande (63) pour ouvrir le canal de dispositif de porte en réponse à une instruction après un appariement réussi par le dispositif de reconnaissance faciale,
sachant que le dispositif de commande (3) inclut :
Un module d'analyse de données (631) pour déterminer, sur la base des données d'entrées et de sorties acquises à partir du terminal, si les données d'entrées et de sorties actuelles contiennent des informations d'entrées après avoir répondu à une instruction après un appariement réussi par le dispositif de reconnaissance faciale ;
Un module d'ouverture de canal de dispositif de porte (632) pour :
Ouvrir le canal de dispositif de porte, et envoyer des informations d'entrées au terminal afin de mettre à jour les données d'entrées et de sorties avec les informations d'entrées si le module d'analyse de données détermine que les données d'entrées et de sorties ne contiennent pas les informations d'entrées et que le canal actuel du dispositif de porte est un canal d'entrée ;
Ouvrir le canal de dispositif de porte, et envoyer des informations de sorties au terminal afin de mettre à jour les données d'entrées et de sorties avec les informations de sorties si le module d'analyse de données détermine que les données d'entrées et de sorties contiennent les informations d'entrées et que le canal actuel du dispositif de porte est un canal de sortie.

6. Le dispositif de porte d'après la revendication 5, **caractérisé en ce que** le dispositif de transmission sans fil inclut :
Un premier module Bluetooth pour établir une connexion de communication sans fil Bluetooth avec le terminal, et recevoir la première valeur de caractéristique faciale via un canal de communication sans fil Bluetooth.

7. Le dispositif de porte d'après l'une quelconque des revendications de 5 à 6, **caractérisé en ce que** le dispositif de reconnaissance faciale comprend :
Un premier module caméra pour capter une image faciale de l'utilisateur en temps réel ;
Un premier module d'affichage pour afficher l'image faciale en temps réel ;
Un module d'appariement pour traiter l'image faciale selon un algorithme d'image prédéfini afin d'acquérir une deuxième valeur de caractéristique faciale et pour apparier la première valeur de caractéristique faciale et la deuxième valeur de caractéristique faciale selon une règle d'appariement prédéfinie ;
Un module de stockage de données pour stocker l'image faciale et effacer les données précédemment mises en cache via le processeur lorsque les données d'image faciale captées en temps réel sont supérieures à une valeur prédéfinie.

8. Le dispositif de porte d'après l'une quelconque des revendications de 5 à 7, **caractérisé en ce que** le dispositif de reconnaissance faciale inclut en outre :
Un module d'effacement de données pour supprimer automatiquement la première valeur de caractéristique faciale et la deuxième valeur de caractéristique faciale précédemment stockées en fonction du temps d'enregistrement lorsque la capacité de stockage de données de la première valeur de caractéristique faciale et de la deuxième valeur de caractéristique faciale acquises de manière cumulative dépasse un volume de données prédéfini

9. Un système de contrôle d'accès à un dispositif de porte incluant un dispositif de porte (6) d'après l'une quelconque des revendications de 5 à 8, et un terminal (9) utilisé pour ouvrir le canal de dispositif de porte.
